(19) Europäisches Patentamt
European Patent Office
Office européen des brevets

(11) **EP 1 680 848 B1**

(12) **EUROPÄISCHE PATENTSCHRIFT**

(45) Veröffentlichungstag und Bekanntmachung des Hinweises auf die Patenterteilung:
**07.04.2010 Patentblatt 2010/14**

(21) Anmeldenummer: **04765882.8**

(22) Anmeldetag: **08.10.2004**

(51) Int Cl.:
**H02H 9/04** *(2006.01)*

(86) Internationale Anmeldenummer:
**PCT/EP2004/011234**

(87) Internationale Veröffentlichungsnummer:
**WO 2005/047759 (26.05.2005 Gazette 2005/21)**

(54) **VORRICHTUNG UND VERFAHREN ZUM FEHLERSICHEREN ABSCHALTEN EINES INDUKTIVEN VERBRAUCHERS**

DEVICE AND METHOD FOR SWITCHING OFF AN INDUCTIVE CONSUMER WITHOUT ERROR

DISPOSITIF ET PROCEDE POUR REALISER LA COMMUTATION SANS ERREUR D'UN RECEPTEUR INDUCTIF

(84) Benannte Vertragsstaaten:
**AT BE BG CH CY CZ DE DK EE ES FI FR GB GR HU IE IT LI LU MC NL PL PT RO SE SI SK TR**

(30) Priorität: **06.11.2003 DE 10351873**

(43) Veröffentlichungstag der Anmeldung:
**19.07.2006 Patentblatt 2006/29**

(73) Patentinhaber: **Pilz GmbH & Co. KG**
**73760 Ostfildern (DE)**

(72) Erfinder:
• **SCHWENKEL, Hans**
**70192 Stuttgart (DE)**
• **LEITMANN, Thomas**
**73207 Plochingen (DE)**
• **HUFNAGEL, Mark**
**72649 Wolfsschlugen (DE)**

(74) Vertreter: **Duhme, Torsten et al**
**Witte, Weller & Partner**
**Patentanwälte**
**Postfach 10 54 62**
**70047 Stuttgart (DE)**

(56) Entgegenhaltungen:
WO-A-01/06162     DE-A1- 19 933 201
US-A- 4 599 675     US-A- 5 404 262
US-A- 5 668 706     US-B1- 6 493 204
US-E- R E36 046

**Beschreibung**

Die vorliegende Erfindung betrifft eine Sicherheitsschaltvorrichtung zum fehlersicheren Abschalten eines induktiven Verbrauchers, insbesondere eines Magnetventils bei einer hydraulischen Presse, mit einem Signalverarbeitungsteil zum Aufnehmen und Auswerten eines eingangsseitigen Abschaltsignals, zumindest einem von dem Signalverarbeitungsteil angesteuerten ersten Schaltelement zum Abschalten des Verbrauchers, einem ersten Schwellwertschalter zum Einstellen einer definierten Induktionsspannung an dem Verbraucher beim Abschalten, und einem Überwachungskreis zum Überwachen des Schwellwertschalters, wobei der Überwachungskreis ausgebildet ist, ein Fehlersignal zu erzeugen, wenn die Induktionsspannung einen Schwellwert unterschreitet.

Die Erfindung betrifft ferner ein entsprechendes Verfahren mit den Schritten: Aufnehmen und Auswerten eines eingangsseitigen Abschaltsignals, Ansteuern eines ersten Schaltelements zum Abschalten des Verbrauchers, Einstellen einer definierten Induktionsspannung an dem Verbraucher beim Abschalten mit Hilfe eines ersten Schwellwertschalters, und Überwachen der definierten Induktionsspannung mit Hilfe eines Überwachungskreises, wobei ein Fehlersignal erzeugt wird, wenn die Induktionsspannung einen Schwellwert unterschreitet.

Eine solche Vorrichtung und ein solches Verfahren sind aus US 6,493,204 B1 bekannt.

Gattungsgemäße Sicherheitsschaltvorrichtungen werden dazu verwendet, um eine technische Anlage, wie beispielsweise eine hydraulische Presse oder eine automatisiert arbeitende Förderanlage, bei Auftreten einer Gefahrensituation zuverlässig, d.h. fehlersicher abzuschalten. Die gattungsgemäßen Sicherheitsschaltvorrichtungen werden dazu eingangsseitig mit Signalgebern verbunden, wie beispielsweise Not-Aus-Tastern, Lichtschranken, Schutztüren, Drehzahlsensoren u.a. Sie werten die Signale dieser Signalgeber in einer festgelegten, fehlersicheren Art und Weise aus und erzeugen in Abhängigkeit davon ausgangsseitig ein Schaltsignal, mit dem dann beispielsweise der Antrieb einer überwachten Anlage gebremst oder stillgesetzt wird. Dadurch wird dann ein sicherer Zustand erreicht.

Da bei einem Versagen der Sicherheitsschaltvorrichtung die Gesundheit oder sogar das Leben von Bedienpersonen u.a. gefährdet sind, gelten für die Entwicklung, die Herstellung und den Betrieb von gattungsgemäßen Sicherheitsschaltvorrichtungen zahlreiche Spezialvorschriften. Die vorliegende Erfindung bezieht sich daher auf (Sicherheits-) Schaltvorrichtungen, die insbesondere die Kategorien 3 oder 4 der einschlägigen europäischen Norm EN 954-1 oder vergleichbare Sicherheitsanforderungen erfüllen. Sie ist jedoch innerhalb dieses Rahmens nicht auf die oben genannten speziellen Beispiele beschränkt.

Um die hohen Anforderungen an die Eigenfehlersicherheit zu erfüllen, sind gattungsgemäße Sicherheitsschaltvorrichtungen häufig redundant aufgebaut und/oder sie führen im Betrieb laufend interne Funktionskontrollen durch. Es ist klar, dass die Entwicklung und Herstellung gattungsgemäßer Sicherheitsschaltvorrichtungen daher einen erheblichen Aufwand im Vergleich zu "normalen" Schaltvorrichtungen erfordert. Dieser erhöhte Aufwand wird aus Kostengründen andererseits nur dort betrieben, wo dies zur Erreichung der erforderlichen Fehlersicherheit notwendig ist. Daher können gattungsgemäße Sicherheitsschaltvorrichtungen durchaus auch Komponenten und/oder Teile enthalten, die für sich genommen nicht die ansonsten geforderte Fehlersicherheit besitzen.

Häufig werden mit gattungsgemäßen Sicherheitsschaltvorrichtungen induktive Verbraucher, insbesondere Schütze oder Magnetventile, abgeschaltet. Es ist bekannt, dass der Stromfluss durch solche Verbraucher aufgrund deren Induktivität nicht abrupt unterbrochen werden kann. Im Moment des Abschaltens, wenn also ein oder mehrere Schaltelemente der Sicherheitsschaltvorrichtung den Strompfad zu dem induktiven Verbraucher unterbrechen, entsteht vielmehr eine Induktionsspannung, deren Höhe die unter normalen Betriebsbedingungen am Verbraucher anliegende Betriebsspannung erheblich übersteigen kann. Es ist ferner bekannt, eine solche Induktionsspannung mit Hilfe von geeigneten Schwellwertschaltern, beispielsweise Zener-Dioden, zu begrenzen. Durch die Begrenzung der Induktionsspannung wird Schäden am Ausgangskreis der Sicherheitsschaltvorrichtung und am abzuschaltenden Verbraucher vorgebeugt. Da die genannten Schwellwertschalter andererseits keinen unmittelbaren Einfluss auf die Sicherheitsfunktion der gattungsgemäßen Schaltvorrichtungen besitzen, war es bislang nicht notwendig, an dieser Stelle Funktionssicherungsmaßnahmen vorzusehen.

Generell ist es wünschenswert, eine überwachte Anlage bei Auftreten einer Gefahrensituation möglichst schnell abzuschalten. Dies gilt insbesondere bei der Überwachung von Pressen, da der herabfahrende Biegestempel einerseits eine große Gefährdung für das Bedienpersonal darstellt und das Bedienpersonal andererseits in unmittelbarer Nähe des Biegestempels arbeiten muss.

Die eingangs genannte US 6,493,204 B1 offenbart eine Vorrichtung zum Ansteuern von Magnetventilen eines Antiblockier-Bremssystems für ein Kraftfahrzeug. Die Vorrichtung beinhaltet ein Leistungsrelais und einen MOS-Transistor, die jeweils seriell zu der Zylinderspule des Magnetventils angeordnet sind. Das Leistungsrelais wird geschlossen, um eine Bestromung der Zylinderspule grundsätzlich zu ermöglichen. Mit Hilfe des MOS-Transistors wird taktweise ein Strom durch die Zylinderspule ein- und ausgeschaltet. Parallel zu der Zylinderspule ist eine Serienschaltung aus einer Freilaufdiode und einer Zener-Diode angeordnet. Die Freilaufdiode dient zum schnellen Entladen der Zylinderspule beim Ausschalten des Stroms. Die Zener-Diode begrenzt die beim Ausschalten des Stroms auftretende Induktionsspannung auf einen Wert, der eine Zerstörung der Freilaufdiode verhindert. Die bekannte Vorrichtung besitzt ferner einen Überwachungskreis, mit dessen Hilfe die Zylinderspule, der MOS-Transistor, die Freilaufdiode und die Zener-Diode überwacht werden. Der Überwachungskreis erzeugt ein Warnsignal, wenn die Freilaufdiode oder die Zener-Dioder einen Kurzschluss haben.

US 5,668,706 offenbart eine fehlersichere Schaltung zum Ansteuern eines induktiven Verbrauchers, insbesondere bei einer Presse. In einem Ausführungsbeispiel ist eine Zener-Diode im Verbraucherkreis angeordnet. Ein Überwachungskreis überwacht die Zener-Diode und verhindert einen weiteren Betrieb des Verbrauchers, wenn die Zener-Diode ausfällt. In diesem Ausführungsbeispiel dient die Zener-Diode allerdings nicht zum Einstellen einer definierten Induktionsspannung, sondern als Schaltelement zum beschleunigten Abschalten des Verbrauchers.

Vor diesem Hintergrund ist es eine Aufgabe der vorliegenden Erfindung, eine Sicherheitsschaltvorrichtung anzugeben, die ein schnelles und gleichermaßen fehlersicheres Abschalten eines induktiven Verbrauchers ermöglicht. Bevorzugt ist es, wenn die neue Sicherheitsschaltvorrichtung dabei möglichst einfach und damit kostengünstig realisiert werden kann.

Gemäß einem Aspekt der vorliegenden Erfindung wird diese Aufgabe durch eine Sicherheitsschaltvorrichtung der eingangs genannten Art gelöst, mit zumindest einem zweiten Schwellwertschalter zum Einstellen der Induktionsspannung, wobei der erste und der zweite Schwellwertschalter so angeordnet sind, dass die Höhe der Induktionsspannung von jedem der Schwellwertschalter beeinflusst wird.

Gemäß einem weiteren Aspekt wird diese Aufgabe durch ein Verfahren der eingangs genannten Art gelöst, wobei die Induktionsspannung ferner durch zumindest einen zweiten Schwellwertschalter eingestellt wird, wobei der erste und der zweite Schwellwertschalter so angeordnet sind, dass die Höhe der Induktionsspannung von jedem der Schwellwertschalter beeinflusst wird.

Bei der neuen Sicherheitsschaltvorrichtung wird die Funktionsfähigkeit des verwendeten Schwellwertschalters und damit implizit die Höhe der beim Abschalten auftretenden Induktionsspannung überwacht. Je höher die entstehende Induktionsspannung ist, desto schneller kann die im induktiven Verbraucher gespeicherte Energie abgebaut werden und desto schneller ist ein gewünschter Abschaltvorgang tatsächlich beendet. Mit anderen Worten kann ein schneller Abschaltvorgang u.a. dadurch realisiert werden, dass der Ausgangskreis der Sicherheitsschaltvorrichtung so dimensioniert ist, dass eine bestimmte Induktionsspannung beim Abschalten des Verbrauchers nicht unterschritten wird. Möchte man sich die erreichbare Abschaltgeschwindigkeit gezielt zunutze machen, indem man beispielsweise ansonsten erforderliche Sicherheitsreserven verringert, wird die Höhe der Induktionsspannung zu einer sicherheitskritischen Größe. Dann wiederum ist es wünschenswert, die Höhe der Induktionsspannung zu überwachen, um das rechtzeitige Abschalten des Verbrauchers unter allen Betriebsumständen sicherzustellen. Der Schwellwertschalter wird hierdurch also zu einem sicherheitskritischen Bestandteil der Schaltvorrichtung.

Durch die Überwachung der Induktionsspannung bzw. des damit zusammenhängenden Schwellwertschalters kann die Entladezeit des induktiven Verbrauchers beim Abschalten innerhalb eines bestimmbaren Zeitfensters garantiert werden. Dieses Zeitfenster kann durch geeignete Dimensionierung des Schwellwertschalters (und ggf. der anderen im Ausgangskreis der Sicherheitsschaltvorrichtung verwendeten Bauelemente) minimiert werden. Daher ermöglicht die neue Sicherheitsschaltvorrichtung ein schnelleres und gleichermaßen zuverlässiges Abschalten.

Ein Funktionafehler, der die Abschaltgeschwindigkeit der neuen Sicherheitsschaltvorrichtung beeinträchtigen könnte, wird frühzeitig gemeldet, so dass ggf. ein Warnsignal erzeugt werden kann und/oder die überwachte Anlage vorsichtshalber in eine sichere Ruheposition gebracht werden kann.

Darüber hinaus kann aufgrund der Erfindung grundsätzlich auch einer Beschädigung der Sicherheitsschaltvorrichtung durch Auftreten zu hoher Induktionsspannungen vorgebeugt werden, oder es können entsprechende Beschädigungen und damit verbundene Funktionsausfälle schneller und zuverlässiger erkannt werden. Die neue Sicherheitsschaltvorrichtung bietet daher eine noch größere Sicherheitsreserve.

In einer Ausgestaltung wird die Induktionsspannung in zumindest zwei Induktionsteilspannungen aufgeteilt und es wird ein Teilerverhältnis der Induktionsteilspannungen überwacht.

Grundsätzlich kann die Induktionsspannung mit einer geeigneten Messwertaufnahme gemessen und dann mit einem definierten Vergleichswert verglichen werden. Bei einem solchen Ansatz ist allerdings auch der Vergleichswert sicherheitskritisch, da ein fehlerhafter Vergleichswert zur Folge haben kann, dass die Induktionsspannung unerkannt unter den gesetzten Minimalwert absinkt. Die bevorzugte Ausgestaltung überwacht die Induktionsspannung daher nicht anhand eines absoluten Messwertes, sondern gewissermaßen relativ durch Vergleich von Induktionsteilspannungen. Diese bevorzugte Ausgestaltung lässt sich wesentlich kostengünstiger realisieren. Dabei macht man sich letztlich zunutze, dass die tatsächliche Höhe der Induktionsspannung herstellerseitig durch den oder die verwendeten Schwellwertschalter bestimmt wird. Zur Überwachung der Induktionsspannung genügt es dann sicherzustellen, dass im Betrieb keine Veränderungen gegenüber den herstellerseitig eingestellten Werten auftreten. Dies geschieht vorteilhaft, indem verschiedene herstellerseitig festgelegte Größen relativ zueinander in Beziehung gesetzt werden, wie hier bevorzugt zwei Induktionsteilspannungen. In einem besonders bevorzugten Fall wird die Induktionsspannung hälftig geteilt, so dass die Überwachung gewissermaßen anhand eines Symmetrievergleichs erfolgt. Grundsätzlich sind jedoch auch andere Teilerverhältnisse möglich.

In einem besonders bevorzugten Ausführungsbeispiel sind die zumindest zwei Schwellwertschalter in Reihe zueinander angeordnet, so dass sich die Höhe der Induktionsspannung bei Ausfall eines Schwellwertschalters zwangsläufig ändert. Besonders bevorzugt ist es dabei, wenn die garantierte minimale Induktionsspannung bereits von einem Schwellwertschalter alleine sichergestellt werden kann, da dann eine Redundanz und eine erhöhte Fehlersicherheit erreicht ist. Darüber hinaus ist diese Ausgestaltung sehr einfach realisierbar, da die beiden Schwellwertschalter von sich aus bereits Induktionsteilspannungen erzeugen.

In einer weiteren Ausgestaltung sind der erste und der zweite Schwellwertschalter in Reihe zueinander angeordnet, wobei zwischen den beiden Schwellwertschaltern ein Abgriff für eine Überwachungsspannung angeordnet ist.

Diese Ausgestaltung ist eine vorteilhafte Fortsetzung des Gedankens, die Induktionsspannung durch Vergleich von Induktionsteilspannungen zu überwachen. Das Abgreifen der Überwachungsspannung zwischen den in Reihe zueinander angeordneten Schwellwertschaltern ist eine besonders einfache Realisierung. Grundsätzlich kann eine zwischen den Schwellwertschaltern abgegriffene Überwachungsspannung jedoch auch auf ihre absolute Größe hin überwacht werden, wobei diese Ausgestaltung generell den Vorteil besitzt, dass einfachere und damit kostengünstigere Messelemente verwendet werden können, die nicht unbedingt hochspannungsfest sein müssen.

In einer weiteren Ausgestaltung definiert der Abgriff einen ersten Spannungsteiler mit einem ersten Teilerverhältnis und es ist ferner ein zweiter Spannungsteiler mit einem zweiten Teilerverhältnis vorhanden, welches dem ersten Teilerverhältnis entspricht.

Diese Ausgestaltung ist die weitere konsequente Umsetzung des Gedankens, die Induktionsspannung relativ und nicht hinsichtlich ihrer absoluten Größe zu überwachen. Mit Hilfe des zweiten Spannungsteilers, der bevorzugt die in der Sicherheitsschaltvorrichtung vorhandene Betriebsspannung in einem festen Verhältnis teilt, kann ein für die Überwachung verwendeter Referenzwert sehr einfach erzeugt werden. Der erste Spannungsteiler teilt dagegen die entstehende Induktionsspannung, wobei der erste Spannungsteiler über die beiden Schwellwertschalter hinaus durchaus noch andere Bauelemente beinhalten kann. Durch Vergleich der einander entsprechenden Teilspannungen der beiden Spannungsteiler wird die voreingestellte Induktionsspannung besonders effizient und wirkungsvoll überwacht.

In einer weiteren Ausgestaltung ist der zweite Spannungsteiler parallel zu dem ersten Spannungsteiler angeordnet.

Durch diese Ausgestaltung wird der schaltungstechnische Aufbau noch weiter vereinfacht, da die miteinander zu vergleichenden Teilspannungen einfach einer Vergleichsschaltung zugeführt werden können.

In einer weiteren Ausgestaltung besitzt die neue Sicherheitsschaltvorrichtung zwei Anschlüsse zum Anschließen des Verbrauchers, wobei die Anschlüsse so angeordnet sind, dass der Verbraucher parallel zu dem oben genannten Abgriff liegt.

Diese Ausgestaltung trägt ebenfalls zu einer besonders einfachen Realisierung bei, da die entstehende Induktionsspannung hierdurch unmittelbar auf die beiden Zweige aufgeteilt wird, die zur Überwachung miteinander verglichen werden. Die Anzahl der erforderlichen Bauelemente wird dabei weiter reduziert.

In einer weiteren Ausgestaltung besitzt die neue Sicherheitsschaltvorrichtung ein zweites von dem Signalverarbeitungsteil angesteuertes Schaltelement, wobei das erste Schaltelement stromaufwärts und das zweite Schaltelement stromabwärts von dem Verbraucher angeordnet ist.

Auch diese Ausgestaltung setzt die Idee, die Induktionsspannung durch Vergleich von - bevorzugt symmetrischen - Teilspannungen zu überwachen, konsequent fort. Die praktische Realisierung wird noch weiter vereinfacht.

In einer weiteren Ausgestaltung beinhaltet der Überwachungskreis einen Optokoppler mit einem Sendeelement und einem Empfangselement, wobei das Sendeelement an einem ersten Anschluss mit einem von der Induktionsspannung abhängigen Signal und an einem zweiten Anschluss mit einem Referenzsignal verbunden ist.

In dieser Ausgestaltung erfolgt der Vergleich der Induktionsspannung oder eines davon abgeleiteten Überwachungssignals mit einem Referenzsignal anhand eines Optokopplers. Üblicherweise werden für solche Zwecke bislang Komparatorschaltungen unter Verwendung von Operationsverstärkern oder herkömmliche Differenzverstärker eingesetzt. Die Verwendung eines Optokopplers besitzt demgegenüber den Vorteil, dass der Rückführungskreis von sich aus bereits eine galvanische Trennung aufweist, die zu einer erhöhten Sicherheit beiträgt. Die Ausgestaltung trägt daher zu einer Reduzierung der benötigten Bauelemente bei.

In einer weiteren Ausgestaltung ist der Schwellwertschalter parallel zu dem Schaltelement angeordnet.

Alternativ hierzu könnte der Schwellwertschalter grundsätzlich auch an einer anderen Stelle, beispielsweise parallel zu dem Verbraucher angeordnet sein. Die bevorzugte Ausgestaltung ermöglicht jedoch eine besonders einfache Realisierung der Idee, die Induktionsspannung durch relativen Vergleich von Teilspannungen zu überwachen.

In einer weiteren Ausgestaltung beinhaltet der Schwellwertschalter zumindest zwei in Reihe zueinander angeordnete Schwellwertschaltelemente, vorzugsweise Zener-Dioden.

In dieser Ausgestaltung ist der eine Schwellwertschalter in sich redundant. Hierdurch wird eine erhöhte Sicherheit erreicht. Insbesondere kann bei Ausfall eines der Schwellwertschaltelemente eine gewünschte minimale Induktionsspannung noch sichergestellt werden. Darüber hinaus besitzt diese Ausgestaltung den Vorteil, dass Schwellwertschalter mit geringeren Leistungswerten und damit geringeren Toleranzen verwendet werden können, was zu einer weiteren Reduzierung von Herstellungskosten beiträgt.

In einer weiteren Ausgestaltung beinhaltet das Schaltelement zumindest zwei in Reihe zueinander angeordnete Transistoren, vorzugsweise MOS-Transistoren.

Diese Ausgestaltung ist besonders vorteilhaft in Kombination mit den beiden zuvor genannten Ausgestaltungen, d.h. wenn mehrere Schwellwertschaltelemente parallel zu mehreren Transistoren angeordnet sind. Der Vorteil ist, dass durch die Verwendung mehrerer Transistoren ein vorzeitiges Durchbrechen der in den einzelnen Transistoren vorhandenen pn-Strecken verhindert wird, ohne dass besonders hochspannungsfeste Transistoren benötigt werden. Darüber hinaus bietet diese Ausgestaltung eine weitere Redundanz, die der Ausfallsicherheit zugute kommt. Bevorzugt sind die beiden in Reihe zueinander angeordneten Transistoren diversitär, d.h. von unterschiedlichen Herstellern und/oder unterschiedlicher Bauart, wodurch das Risiko eines zeitgleichen Ausfalls noch weiter reduziert ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

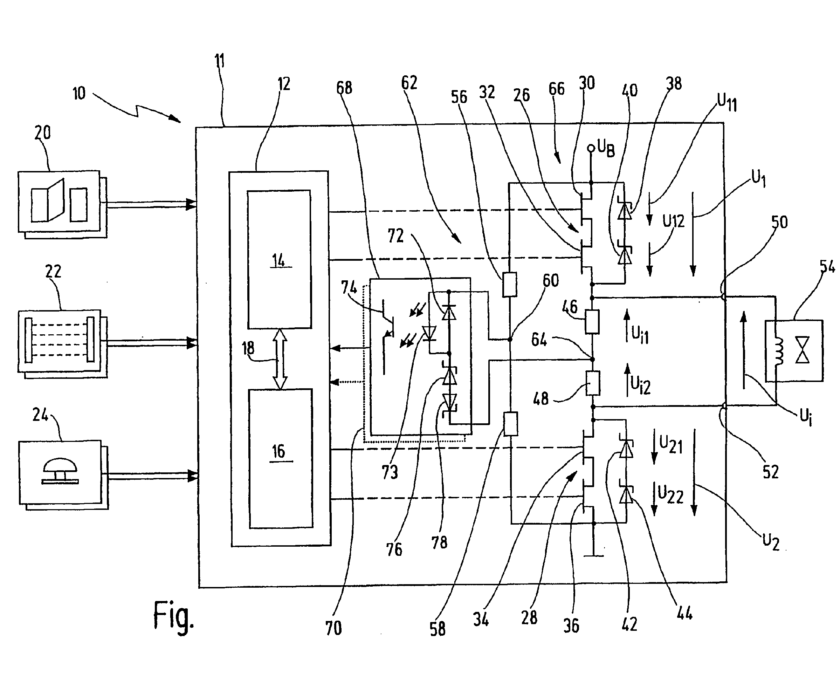

Ein besonders bevorzugtes Ausführungsbeispiel der Erfindung ist in der Zeichnung dargestellt und wird in der nachfolgenden Beschreibung näher erläutert.

In der einzigen Figur ist ein Ausführungsbeispiel der neuen Sicherheitsschaltvorrichtung in seiner Gesamtheit mit der Bezugsziffer 10 bezeichnet. Die Sicherheitsschaltvorrichtung 10 ist hier beispielhaft ein autark funktionsfähiges Sicherheitsschaltgerät, bei dem sämtliche Funktionselemente kompakt in einem Gerätegehäuse 11 eingebaut sind. Alternativ hierzu könnte es sich jedoch beispielsweise auch um eine Baugruppe einer komplexen Sicherheitssteuerung, insbesondere einer für Sicherheitszwecke ausgelegten SPS (Speicher Programmierbare Steuerung) handeln. In einem weiteren Ausführungsbeispiel (hier nicht gesondert dargestellt) könnte die Sicherheitsschaltvorrichtung 10 mit räumlich verteilten Komponenten aufgebaut sein, die beispielsweise über ein Bussystem miteinander verbunden sind.

Die Sicherheitsschaltvorrichtung 10 besitzt einen Signalverarbeitungsteil 12. Der Signalverarbeitungsteil 12 ist hier entsprechend der vorgesehenen Verwendung und der damit verbundenen Sicherheitsanforderungen mehrkanalig aufgebaut. Vereinfacht ist der Signalverarbeitungsteil 12 daher mit zwei Mikroprozessoren 14, 16 dargestellt, die miteinander kommunizieren und sich gegenseitig überwachen, was durch einen Pfeil 18 dargestellt ist.

Eingangsseitig können an die Sicherheitsschaltvorrichtung 10 Signalgeber für Sicherheitszwecke angeschlossen werden. Bei - spielhaft, jedoch nicht beschränkend, sind hier Schutztüren 20, Lichtschranken 22 und Not-Aus-Schalter 24 dargestellt. Der Signalverarbeitungsteil 12 wertet die Signale dieser Signalgeber in an sich bekannter Weise fehlersicher aus und steuert in Abhängigkeit davon ein oder mehrere ausgangsseitige Schaltelemente an.

Im vorliegenden Fall besitzt die Sicherheitsschaltvorrichtung 10 zwei ausgangsseitige Schaltelemente 26, 28, die jeweils zwei in Reihe zueinander angeordnete MOS-Transistoren beinhalten. Die Transistoren sind hier mit den Bezugsziffern 30, 32, 34 und 36 bezeichnet und liegen in Reihe zueinander zwischen einer Betriebsspannung $U_B$ und Masse. Jeder der vier MOS-Transistoren 30, 32, 34, 36 kann über eine entsprechende Verbindung von dem Signalverarbeitungsteil 12 angesteuert werden.

Parallel zu den beiden Transistoren 30, 32 sind zwei Zener-Dioden 38, 40 in Reihe zueinander angeordnet. Die Zener-Dioden 38, 40 bilden gemeinsam einen ersten Schwellwertschalter im Sinne der vorliegenden Erfindung.

Die Transistoren 34, 36 bilden zusammen das zweites Schaltelement. Parallel zu diesem zweiten Schaltelement sind zwei weitere Zener-Dioden 42, 44 in Reihe zueinander angeordnet. Die Zener-Dioden 42, 44 sind ein zweiter Schwellwertschalter im Sinne der vorliegenden Erfindung.

Die Verwendung von MOS-Transistoren 30 bis 36 und Zener-Dioden 38 bis 44 ist ein derzeit bevorzugtes Ausführungsbeispiel. Abweichend hiervon können jedoch auch andere Bauelemente, beispielsweise bipolare Transistoren für die Schaltelemente oder herkömmliche Dioden oder Tyristoren als Schwellwertschaltelemente verwendet werden. Darüber hinaus ist die hier gezeigte Verwendung von jeweils zwei Transistoren und zwei Zener-Dioden eine bevorzugte Variante. Abweichend hiervon können jedoch auch noch weitere Elemente oder nur ein Transistor und eine Zener-Diode verwendet werden.

Zwischen dem ersten Schaltelement 26 und dem zweiten Schaltelement 28 sind seriell zwei Widerstände 46, 48 angeordnet. Insgesamt ergibt sich hiermit also eine Serienschaltung der Transistoren 30, 32, der Widerstände 46, 48 und der Transistoren 34, 36 zwischen Betriebsspannung $U_B$ und Masse. Parallel zu den Transistoren 30, 32 befinden sich die Zener-Dioden 38, 40 und parallel zu den Transistoren 34, 36 liegen die Zener-Dioden 42, 44.

An einem ersten Knotenpunkt zwischen dem Transistor 32 und dem Widerstand 46 befindet sich ein Abgriff, der zu einem Anschluss 50 der Sicherheitsschaltvorrichtung 10 geführt ist. In gleicher Weise befindet sich ein zweiter Abgriff zwischen dem Transistor 34 und dem Widerstand 48. Der zweite Abgriff ist zu einem Anschluss 52 geführt. An die Anschlüsse 50, 52 wird im Betrieb der Sicherheitsschaltvorrichtung 10 ein Verbraucher angeschlossen, der hier beispielhaft als Magnetventil 54 dargestellt ist. Ein derartiger Anschluss des Verbrauchers 54 wird in der Fachterminologie üblicherweise als zweipoliger Anschluss bezeichnet. Ein zweipoliger Anschluss stellt den bevorzugten Anwendungsfall für die vorliegende Erfindung dar. Grundsätzlich kann die Erfindung jedoch auch bei einpoligen Ausgangsanschlüssen angewendet werden.

Parallel zu der Serienschaltung aus den Transistoren 30 bis 36 und den Widerständen 46, 48 befindet sich eine Serienschaltung aus zwei Widerständen 56, 58. Zwischen den beiden Widerständen 56, 58 ist ein Abgriff 60, so dass die Widerstände 56, 58 einen Spannungsteiler bilden, der hier mit der Bezugsziffer 62 bezeichnet ist. Der Spannungsteiler 62 ist ebenso wie die Serienschaltung aus den Transistoren 30 bis 36 und den Widerständen 46, 48 zwischen Betriebsspannung $U_B$ und Masse angeordnet.

Ein weiterer Abgriff, der zwischen den beiden Widerständen 46, 48 angeordnet ist, ist hier mit der Bezugsziffer 64 bezeichnet. Der Abgriff 64 teilt die Reihenschaltung aus den Transistoren 30, 32, 34, 36 und den Widerständen 46, 48 mittig, so dass ein zweiter Spannungsteiler 66 gebildet wird. Bevorzugt sind die Teilerverhältnisse des ersten Spannungsteilers 62 und des zweiten Spannungsteilers 66 gleich groß. Noch weiter bevorzugt ist es, dass die Teilerverhältnisse hier jeweils 0,5 betragen, d.h. dass an den Abgriffen 60, 64 im Normalbetrieb jeweils eine Spannung in Höhe von $U_B/2$ anliegt. Grundsätzlich sind jedoch auch andere Teilerverhältnisse möglich.

Mit den Bezugsziffern 68 und 70 sind zwei Optokoppler bezeichnet, wobei der Optokoppler 70 hier redundant zum Optokoppler 68 arbeitet und ggf. auch entfallen kann. Der Optokoppler 68 besitzt hier zwei Sendeelemente 72, 73, die antiparallel zueinander geschaltet sind, sowie ein Empfangselement 74. Die Sendeelemente 72, 73, typischerweise LEDs, sind an einem Anschluss mit dem Abgriff 60 und an einem zweiten Anschluss mit einer Reihenschaltung aus zwei Zener-Dioden 76, 78 verbunden. Die beiden Zener-Dioden 76, 78 liegen dabei gedreht zueinander, so dass jeweils nur eine in Durchlassrichtung und die andere dann in Sperrrichtung arbeitet. Das offene Ende der Reihenschaltung der beiden Zener-Dioden 76, 78 ist mit dem Abgriff 64 verbunden. Die Zener-Dioden 76, 78 sorgen dafür, dass die Sendeelemente 72, 73 erst ab einer definierten Schaltschwelle ein Sendesignal erzeugen. Ein solches Sendesignal führt dann zu einem Rückkopplungssignal an den Signalverarbeitungsteil 12. Mit den beiden antiparallel geschalteten Sendeelementen 72, 73 wird dabei eine Art Betragsbildung erreicht, da die Differenzspannung zwischen den Abgriffen 60 und 64 negativ oder positiv sein kann. Abhängig davon spricht hier jeweils nur ein Sendeelement 72, 73 an. Alternativ könnte man diese Betragsbildung auch mit Hilfe von zwei antiparallel angeordneten Optokopplern 68, 70 erreichen, in denen dann jeweils nur ein Sendeelement 72 verwendet ist.

Die Funktionsweise der gezeigten Sicherheitsschaltvorrichtung 10 ist wie folgt:

Im stationären Betrieb, wenn also das Magnetventil 54 bestromt ist, liegt über dem Magnetventil 54 eine Spannung, die in etwa der Betriebsspannung $U_B$ entspricht. Die Betriebsspannung $U_B$ wird über die beiden Spannungsteiler 62, 66 ferner hälftig geteilt und die entstehenden Teilspannungen sind an den Abgriffen 60, 64 den Optokopplern 68, 70 zugeführt. Da die Spannungen an den Abgriffen 60, 64 praktisch gleich groß sind (abgesehen von etwaigen geringfügigen Toleranzen), liegt an dem Sendeelement 72 keine Spannung an und das Empfangselement 74 erhält dementsprechend kein Sendesignal.

Wenn nun der Signalverarbeitungsteil 12 den Verbraucher 54 abschalten möchte (oder einen Abschalttest durchführen möchte), steuert er die Transistoren 30 bis 36 so an, dass der Strompfad zu dem Verbraucher 54 unterbrochen wird. Mit anderen Worten öffnet der Signalverarbeitungsteil 12 die Transistoren 30 bis 36. Durch die Unterbrechung des Strompfades entsteht über dem Verbraucher 54 eine Induktionsspannung $U_i$. Die Induktionsspannung $U_i$ wird durch die Zener-Dioden 38 bis 44 begrenzt. Mit anderen Worten wird die Höhe der Induktionsspannung $U_i$ durch die Dimensionierung der Zener-Dioden 38 bis 44 eingestellt.

Für die Spannungen im Ausgangskreis der Sicherheitsschaltvorrichtung 10 gelten dann folgende Zusammenhänge (bei einem Teilerverhältnis der Spannungsteiler 62, 66 von 0,5):

$$U_i \quad = \quad U_1 + U_2 - U_B$$

und

$$U_{i1} \quad = \quad U_{i2} \quad = U_i/2 \, ,$$

wobei $U_1$ die Spannung über dem ersten Schaltelement 26,
$U_2$ die Spannung über dem zweiten Schaltelement 28,
$U_i$ die Induktionsspannung über dem Verbraucher 54,
$U_{i1}$ die Spannung über dem Widerstand 46,
$U_{i2}$ die Spannung über dem Widerstand 48 und

$U_B$ die Betriebsspannung ist.

Die Spannung am Abgriff 64 beträgt dann:

$$U_{64} \;=\; U_2 - U_{i2} \;=\; \frac{U_i + U_B}{2} \;-\; \frac{U_i}{2} \;=\; \frac{U_B}{2}$$

Mit anderen Worten bleibt die Spannung am Abgriff 64 auch beim Abschalten des Verbrauchers 54 praktisch unverändert, solange die Teilspannungen $U_{i1}$ und $U_{i2}$ bzw. die Teilspannungen $U_1$ und $U_2$ jeweils gleich groß sind. Würde nun eine der Zener-Dioden 40 bis 44 defekt sein, gilt diese Annahme nicht mehr. Der Spannungsteiler 66 würde die auftretende Induktionsspannung ungleichmäßig aufteilen, was dazu führt, dass sich die Potentiale an den Abgriffen 60 und 64 voneinander unterscheiden. Dies hätte zur Folge, dass das Sendeelement 72 mit einer Spannung beaufschlagt wird, die zu einem Sendesignal der Optokoppler 68, 70 führt.

Gemäß einem bevorzugten Ausführungsbeispiel sind die Zener-Dioden 38 bis 44 hier so dimensioniert, dass eine minimale Induktionsspannung von $U_i$ = 100 V selbst dann erreicht wird, wenn eine der Zener-Dioden defekt wird.

## Patentansprüche

1. Sicherheitsschaltvorrichtung zum fehlersicheren Abschalten eines induktiven Verbrauchers (54), insbesondere eines Magnetventils bei einer Presse, mit einem Signalverarbeitungsteil (12) zum Aufnehmen und Auswerten eines eingangsseitigen Abschaltsignals (20, 22, 24), zumindest einem von dem Signalverarbeitungsteil (12) angesteuerten ersten Schaltelement (26) zum Abschalten des Verbrauchers (54), einem ersten Schwellwertschalter (38, 40) zum Einstellen einer definierten Induktionsspannung ($U_1$) an dem Verbraucher (54) beim Abschalten, und einem Überwachungskreis (46, 48, 56, 58, 68, 70) zum Überwachen des Schwellwertschalters (38, 40), wobei der Überwachungskreis (46, 48, 56, 58, 68, 70) ausgebildet ist, ein Fehlersignal zu erzeugen, wenn die Induktionsspannung ($U_i$) einen Schwellwert unterschreitet, **gekennzeichnet durch** zumindest einen zweiten Schwellwertschalter (42, 44) zum Einstellen der Induktionsspannung ($U_i$), wobei der erste und der zweite Schwellwertschalter so angeordnet sind, dass die Höhe der Induktionsspannung ($U_i$) von jedem der Schwellwertschalter (38, 40, 42, 44) beeinflusst wird.

2. Vorrichtung nach Anspruch 1, **dadurch gekennzeichnet, dass** der erste und der zweite Schwellwertschalter (38, 40, 42, 44) in Reihe zueinander angeordnet sind, wobei zwischen den beiden Schwellwertschaltern (38, 40, 42, 44) ein Abgriff (62) für ein Überwachungssignal angeordnet ist.

3. Vorrichtung nach Anspruch 2, **dadurch gekennzeichnet, dass** der Abgriff (62) einen ersten Spannungsteiler (66) mit beinem ersten Teilerverhältnis definiert und dass ferner ein zweiter Spannungsteiler (62) mit einem zweiten Teilerverhältnis vorhanden ist, welches dem ersten Teileverhältnis entspricht.

4. Vorrichtung nach einem der Ansprüche 1 bis 3, **dadurch gekennzeichnet, dass** der erste und zweite Schwellwertschalter (38, 40, 42, 44) so dimensioniert sind, dass eine garantierte minimale Induktionsspannung selbst dann erreicht wird, wenn einer der Schwellwertschalter (38, 40, 42, 44) defekt

5. Vorrichtung nach Anspruch 3 oder 4, **dadurch gekennzeichnet, dass** der zweite Spannungsteiler (62) parallel zu dem ersten Spannungsteiler (66) angeordnet ist.

6. Vorrichtung nach Anspruch 3, 4 oder 5, **gekennzeichnet durch** zwei Anschlüsse (50, 52) zum Anschließen des Verbrauchers (54), wobei die Anschlüsse (50, 52) so angeordnet sind, dass der Verbraucher (54) parallel zu dem Abgriff (62) liegt.

7. Vorrichtung nach einem der Anspüche 1 bis 6, **gekennzeichnet durch** ein zweites vom dem Signalverarbeitungsteil (12) angesteuertes Schaltelement (28), wobei das erste, Schaltelement (26) stromaufwärts und das zweite Schaltelement (28) stromabwärts von dem Verbraucher (54) angeordnet ist.

8. Vorrichtung nach einem der Ansprüche 1 bis 7, **dadurch gekennzeichnet, dass** der Überwachungskreis einen Optokoppler (68, 70) mit einem Sendeelement (72) und einem Empfangselement (74) beinhaltet, wobei das Sendelement (72) an einem ersten Anschluss mit einem von der Induktionsspannung ($U_i$) abhängigen Signal und an einem zweiten Anschluss mit einem Referenzsignal verbunden ist.

9. Vorrichtung nach einem der Ansprüche 1 bis 8, **dadurch gekennzeichnet, dass** der Schwellwertschalter (38, 40; 42, 44) parallel zu dem Schaltelement (26; 28) angeordnet ist.

10. Vorrichtung nach einem der Ansprüche 1 bis 9, **dadurch gekennzeichnet, dass** der Schwellwertschalter zumindest zwei in Reihe zueinander angeordnete Schwellwertschaltelemente (38, 40; 42, 44), vorzugsweise Zener-Dioden, besitzt.

11. Vorrichtung nach einem der Ansprüche 1 bis 10, **dadurch gekennzeichnet, dass** das Schaltelement (26; 28) zumindest zwei in Reihe zueinander angeordnete Transistoren (30, 32; 34, 36), vorzugsweise MOS-Transistoren, beinhaltet.

12. Verfahren zum fehlersicheren Abschalten eines induktiven Verbrauchers (54), insbesondere eines Magnetventils bei einer hydraulischen Presse, mittels einer Sicherheitsschaltvorrichtung nach einem der Ansprüche 1 bis 11, mit den Schritten:

   - Aufnehmen und Auswerten eines eingangsseitigen Abschaltsignals (20, 22, 24),
   - Ansteuern eines ersten Schaltelements (26) zum Abschalten des Verbrauchers (54),
   - Einstellen einer definierten Induktionsspannung ($U_i$) an dem Verbraucher (54) beim Abschalten mit Hilfe eines ersten Schwellwertschalters (38, 40), und
   - Überwachen der definierten Induktionsspannung ($U_i$) mit Hilfe eines Überwachungskreises (46, 48, 56, 58, 68, 70), wobei ein Fehlersignal erzeugt wird, wenn die Induktionsspannung ($U_i$ einen Schwellwert unterschreitet, **dadurch gekennzeichnet, dass** die Induktionsspannung ($U_i$) ferner durch zumindest einen zweiten Schwellwertschalter (42, 44) eingestellt wird, wobei der erste und der zweite Schwellwertschalter so angeordnet sind, dass die Höhe der Induktionsspannung ($U_i$) von jedem der Schwellwertschalter (38, 40, 42, 44) beeinflusst wird.

13. Verfahren nach Anspruch 12, **dadurch gekennzeichnet, dass** die Induktionsspannung ($U_i$) in zumindest zwei Induktionsteilspannungen ($U_{i1}$, $U_{i2}$) aufgeteilt wird, und dass ein Teilerverhältnis der Induktionsteilspannungen ($U_{i1}$, $U_{i2}$) überwacht wird.

**Claims**

1. A safety switching device for failsafely switching off an inductive load (54), in particular a magnetic valve in a press, comprising a signal processing section (12) for receiving and evaluating an input-sided switching-off signal (20, 22, 24), at least one first switching element (26), activated by the signal processing section (12), for switching off the load (54), a first threshold switch (38, 40) for setting a defined inductive voltage ($U_i$) at the load (54) during the switching-off, and a monitoring circuit (46, 48, 56, 58, 68, 70) for monitoring the threshold switch (38, 40), wherein the monitoring circuit (46, 48, 56, 58, 68, 70) is configured to generate an error signal when the inductive voltage ($U_i$) drops below a threshold value, **characterized by** at least one second threshold switch (42, 44) for setting the inductive voltage ($U_i$), the first and the second threshold switches being arranged in such a manner that the magnitude of the inductive voltage ($U_i$) is influenced by each of the threshold switches (38, 40, 42, 44).

2. The device of claim 1, **characterized in that** the first and the second threshold switches (38, 40, 42, 44) are arranged in series with one another, wherein a tap (62) for a monitoring signal is arranged between the two threshold switches (38, 40, 42, 44).

3. The device of claim 2, **characterized in that** the tap (62) defines a first voltage divider (66) having a first divider ratio, and a second voltage divider (62) having a second divider ratio is provided, wherein the second divider ratio corresponds to the first divider ratio.

4. The device of one of claims 1 to 3, **characterized in that** the first and second threshold switches (38, 40, 42, 44) are dimensioned in such a manner that a guaranteed minimum inductive voltage is achieved even if one of the threshold switches (38, 40, 42, 44) becomes defective.

5. The device of claim 3 or 4, **characterized in that** the second voltage divider (62) is arranged in parallel with the first voltage divider (66).

6. The device of one of claims 3, 4 or 5, **characterized by** two terminals (50, 52) for connecting the load (54), the terminals (50, 52) being arranged in such a manner that the load (54) is located in parallel with the tap (62).

7. The device of anyone of claims 1 to 6, **characterized by** a second switching element (28) activated by the signal processing section (12), the first switching element (26) being arranged upstream and the second switching element (28) being arranged downstream of the load (54).

8. The device of anyone of claims 1 to 7, **characterized in that** the monitoring circuit comprises an optocoupler (68, 70) having a transmitting element (72) and a receiving element (74), the transmitting element (72) being connected to a signal dependent on the inductive voltage ($U_i$) at a first terminal and to a reference signal at a second terminal.

9. The device of anyone of claims 1 to 8, **characterized by** the threshold switch (38, 40; 42, 44) being arranged in parallel with the switching element (26; 28).

10. The device of one of claims 1 to 9, **characterized in that** the threshold switch has at least two threshold switching elements (38, 40; 42, 44), preferably Zener diodes, which are arranged in series with one another.

11. The device of one of claims 1 to 10, **characterized in that** the switching element (26; 28) comprises at least two transistors (30, 32; 34, 36), preferably MOS transistors, which are arranged in series with one another.

12. A method for failsafely switching off an inductive load (54), in particular a magnetic valve in an hydraulic press, by means of a safety switching device in accordance with one of claims 1 to 11, the method comprising the following steps:

   - receiving and evaluating an input-sided switching-off signal (20, 22, 24),
   - activating a first switching element (26) for switching off the load (54),
   - setting a defined inductive voltage ($U_i$) at the load (54) during the switching-off by means of a first threshold switch (38, 40), and
   - monitoring the defined inductive voltage ($U_i$) by means of a monitoring circuit (46, 48, 56, 58, 68, 70), wherein an error signal is generated when the inductive voltage ($U_i$) drops below a threshold value,
   **characterized in that** the inductive voltage ($U_i$) is further set by at least one second threshold switch (42, 44), wherein the first and the second threshold switches are arranged in such a manner that the magnitude of the inductive voltage ($U_i$) is influenced by each of the threshold switches (38, 40, 42, 44).

13. The method of claim 12, **characterized in that** the inductive voltage ($U_i$) is divided into at least two inductive partial voltages ($U_{i1}$, $U_{i2}$), a divider ratio of the inductive partial voltages ($U_{i1}$, $U_{i2}$) being monitored.

**Revendications**

1. Dispositif de commutation de sécurité pour la déconnexion sans défaillance d'un récepteur inductif (54), en particulier d'une vanne électromagnétique pour une presse, avec une partie de traitement de signal (12) pour l'enregistrement et l'analyse d'un signal de déconnexion côté entrée (20, 22, 24), au moins un premier élément de commutation (26) commandé par la partie de traitement de signal (12) pour la déconnexion du récepteur (54), un premier commutateur de valeur seuil (38, 40) pour le réglage d'une tension d'induction ($U_i$) définie sur le récepteur (54) lors de la déconnexion, et un circuit de surveillance (46, 48, 56, 58, 68, 70) pour la surveillance du commutateur de valeur seuil (38, 40), le circuit de surveillance (46, 48, 56, 58, 68, 70) étant réalisé pour générer un signal d'erreur si la tension d'induction ($U_i$) est inférieure à la valeur seuil, **caractérisé par** au moins un deuxième commutateur de valeur seuil (42, 44) pour le réglage de la tension d'induction ($U_i$), le premier et le deuxième commutateurs de valeur seuil étant disposés de manière que le niveau de la tension d'induction ($U_i$) soit influencé par chacun des commutateurs de valeur seuil (38, 40, 42, 44).

2. Dispositif selon la revendication 1, **caractérisé en ce que** le premier et le deuxième commutateurs de valeur seuil (38, 40, 42, 44) sont disposés en ligne l'un par rapport à l'autre, un capteur (62) pour un signal de surveillance étant disposé entre les deux commutateurs de valeur seuil (38, 40, 42, 44).

**3.** Dispositif selon la revendication 2, **caractérisé en ce que** le capteur (62) définit un premier diviseur de tension (66) avec une première relation de diviseur, et **en ce qu'**est également présent un deuxième diviseur de tension (62) avec une deuxième relation de diviseur, laquelle correspond à la première relation de diviseur.

**4.** Dispositif selon l'une des revendications 1 à 3, **caractérisé en ce que** le premier et le deuxième commutateurs de valeur seuil (38, 40, 42, 44) sont dimensionnés de telle manière qu'une tension d'induction minimale garantie soit obtenue même si un des commutateurs de valeur seuil (38, 40, 42, 44) est défectueux.

**5.** Dispositif selon la revendication 3 ou la revendication 4, **caractérisé en ce que** le deuxième diviseur de tension (62) est disposé parallèlement au premier diviseur de tension (66).

**6.** Dispositif selon la revendication 3, la revendication 4 ou la revendication 5, **caractérisé par** deux connexions (50, 52) pour le raccordement du récepteur (54), les connexions (50, 52) étant disposées de telle manière que le récepteur (54) est parallèle au capteur (62).

**7.** Dispositif selon l'une des revendications 1 à 6, **caractérisé par** un deuxième élément de commutation (28) commandé par la partie de traitement de signal (12), le premier élément de commutation (26) étant disposé en amont, et le deuxième élément de commutation (28) en aval du récepteur (54).

**8.** Dispositif selon l'une des revendications 1 à 7, **caractérisé en ce que** le circuit de surveillance comprend un optocoupleur (68, 70) avec un élément d'émission (72) et un élément de réception (74), l'élément d'émission (72) étant raccordé à un signal dépendant de la tension d'induction ($U_i$) par une première connexion, et à un signal de référence par une deuxième connexion.

**9.** Dispositif selon l'une des revendications 1 à 8, **caractérisé en ce que** le commutateur de valeur seuil (38, 40 ; 42, 44) est disposé parallèlement à l'élément de commutation (26 ; 28).

**10.** Dispositif selon l'une des revendications 1 à 9, **caractérisé en ce que** le commutateur de valeur seuil comporte deux éléments de commutation de valeur seuil (38, 40 ; 42, 44) disposés en ligne l'un par rapport à l'autre, de préférence des diodes Zener.

**11.** Dispositif selon l'une des revendications 1 à 10, **caractérisé en ce que** l'élément de commutation (26 ; 28) comprend au moins deux transistors (30, 32 ; 34, 36) disposés en ligne l'un par rapport à l'autre, de préférence des transistors MOS.

**12.** Procédé pour la déconnexion sans défaillance d'un récepteur inductif (54), en particulier d'une vanne électromagnétique pour une presse hydraulique, au moyen d'un dispositif de commutation de sécurité selon l'une des revendications 1 à 11, comprenant les étapes suivantes :

    - enregistrement et analyse d'un signal de déconnexion côté entrée (20, 22, 24),
    - commande d'un premier élément de commutation (26) pour la déconnexion du récepteur (54),
    - réglage d'une tension d'induction ($U_i$) définie sur le récepteur (54) lors de la déconnexion, et
    - surveillance de la tension d'induction ($U_i$) définie au moyen d'un circuit de surveillance (46, 48, 56, 58, 68, 70), un signal d'erreur étant généré si la tension d'induction ($U_i$) est inférieure à une valeur seuil,
    **caractérisé en ce que** la tension d'induction ($U_i$) est en outre réglée au moyen d'un deuxième commutateur de valeur seuil (42, 44), le premier et le deuxième commutateurs de valeur seuil étant disposés de manière que le niveau de la tension d'induction ($U_i$) soit influencé par chacun des commutateurs de valeur seuil (38, 40, 42, 44).

**13.** Procédé selon la revendication 12, **caractérisé en ce que** la tension d'induction ($U_i$) est divisée en au moins deux tensions d'induction partielles ($U_{i1}$, $U_{i2}$), et **en ce qu'**une relation de diviseur des tensions d'induction partielles ($U_{i1}$, $U_{i2}$) est surveillée.

Fig.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6493204 B1

- US 5668706 A